# EUROPÄISCHE PATENTSCHRIFT

(11) **EP 0 757 637 B1**
(45) Veröffentlichungstag und Bekanntmachung des Hinweises auf die Patenterteilung: **04.11.1998**
(21) Anmeldenummer: 95917258.6
(22) Anmeldetag: 28.04.1995
(51) Int. Cl.: B60S 3/00, A47L 1/06

(54) **VORRICHTUNG ZUM REINIGEN VON KONKAVEN FLÄCHEN**
DEVICE FOR CLEANING CONCAVE SURFACES
DISPOSITIF DE NETTOYAGE DE SURFACES CONCAVES

(30) Priorität: 29.04.1994 DE 4414992
(43) Veröffentlichungstag der Anmeldung: 12.02.1997
(73) Patentinhaber: Bohnenberg, Harald, 40597 Düsseldorf (DE); Göcke, Ludwig, 30826 Garbsen (DE)
(72) Erfinder: Bohnenberg, Harald, 40597 Düsseldorf (DE); Göcke, Ludwig, 30826 Garbsen (DE)
(74) Vertreter: Lippert, Hans-Joachim, Dipl.-Ing.
(86) Internationale Anmeldenummer: DE9500554
(87) Internationale Veröffentlichungsnummer: WO9529828

(56) Entgegenhaltungen:
- EP-A- 0 353 107
- WO-A-92/19142
- WO-A-93/26148
- CA-A- 1 257 955
- DE-A- 2 258 059
- DE-A- 2 324 438
- DE-U- 9 407 105
- US-A- 4 032 239
- US-A- 4 312 093
- US-A- 4 922 569

## Beschreibung

Die Erfindung betrifft einen Innenscheibenwischer, insbesondere für Kfz-Innenscheiben.

Aus der US-A-4,032,239 ist ein Scheibenwischer bekannt, der auch für Kfz-Innenscheiben prinzipiell geeignet ist. Dieser Scheibenwischer ist aber in der Ausgestaltung seines Wischerkörpers nicht dahingehend optimiert, so daß auch schwerzugängliche Stellen, insbesondere Stellen zwischen Armaturenkonsole und Windschutzscheibe, gereinigt werden können.

Ferner ist aus der WO-A-92/19142 ein Innenscheiben-Klarsichtwäscher bekannt, bei dem die Neigungslage eines im Prinzip blattförmigen Reinigungsteils mittels eines auswechselbaren Kreuzgelenks gegenüber dem Griff frei einstellbar ist, wobei aber die Drehlage des Reinigungsteiles zur Längsachse des Griffes beibehalten wird. Das Reinigungsteil dieses Klarsichtwäschers ist gewölbt und erlaubt eine gleichmäßige, flächige Reinigung der Autoscheiben-Innenflächen. Durch die mittige Anordnung des Kreuzgelenks ist aber auch hier eine Reinigung der schwerzugänglichen Stellen zwischen Windschutzscheibe und Armaturenkonsole nicht möglich.

Aufgabe der vorliegenden Erfindung ist es daher, einen Innenscheibenwischer zu schaffen, der in seinem Aktionsradius nicht eingeschränkt ist, der auch an die schwerzugänglichen Stellen zwischen Armaturenkonsole und Windschutzscheibe gelangen kann und auch für konkave Flächen geeignet ist, die einen Neigungswinkel über 10° bzw. deutlich über 10° aufweisen, sowie in seiner Handhabung so ergonomisch ausgebildet ist, daß er bei Nichtgebrauch bequem in einem Handschuhfach untergebracht werden kann.

Erfindungsgemäß wird die Aufgabe durch einen Innescheibenwischer der eingangs genannten Art nach der US-A-4 032 239 gelöst, der dadurch gekennzeichnet ist, daß
- der Wischerkörper in etwa keilförmig ist,
- bei Nichtgebrauch des Innenscheibenwischers der Betätigungsgriff über den Wischerkörper verschwenkbar ist, so daß
- das freie Ende des Betätigungsgriffs an dem dem Drehgelenk gegenüberliegenden Ende des in etwa keilförmigen Wischerkörpers anliegt und die gesamte Oberseite des Innenscheibenwischers eine geschlossene bogenförmige Gestalt hat.

Mit einem solch ausgestalteten Innenscheibenwischer sind selbst schwerzugängliche Stellen zwischen Armaturenkonsole und Windschutzscheibe einfach und effektiv zugänglich. Insbesondere durch die gelenkige Verbindung und die keilförmige Ausgestaltung des Wischerkörpers zwischen Wischerkörper und Betätigungsgriff ist ein guter Kontakt zwischen der Wischerfläche und der zu reinigenden konkaven Fläche gewährleistet.

Der keilförmige Wischerkörper kann dabei insbesondere eine etwa dreieckförmige Gestalt aufweisen. Vorzugsweise sind die an die Wischerseite grenzenden Winkel des Dreieckes unterschiedlich spitz.

Typischerweise ist als Gelenk ein Kugelgelenk vorgesehen, das in bekannter Weise aus einer Gelenkkugel und einer Gelenkpfanne besteht, wobei die Gelenkpfanne die Gelenkkugel umgreift.

Vorzugsweise sind der Wischerkörper und der Betätigungsgriff über das Gelenk nur senkrecht zu der bevorzugten Wischrichtung gegeneinander verschwenkbar. Durch diese Maßnahme wird der Bedienungskomfort und die Bedienungssicherheit erhöht, da ein ungewolltes seitliches Verrutschen gegenüber dem Führungsarm verhindert wird.

Typischerweise ist die Wischerfläche leicht konvex ausgebildet. Durch diese Konvexität der Wischerfläche wird ein besseres Anliegen des Wischerkörpers an der zu reinigenden konkaven Fläche gesichert.

In einer bevorzugten Ausführung ist der Betätigungsgriff unter einem stumpfen Winkel gebogen. Durch diesen Knick im Betätigungsgriff wird die Handhabung des Innenscheibenwischers in ergonomischer Weise begünstigt, insbesondere bei der Reinigung der nur sehr schwer zugänglichen Partien einer Windschutzscheibe in Höhe der Armaturenkonsole besonders hinter den Ausbuchtungen von Tachometer, Drehzahlmesser bzw. der sonstigen Anzeigeinstrumente auf der Fahrerseite.

Des weiteren kann der Betätigungsgriff ausziehbar ausgebildet sein. Durch die teleskopartige Ausbildung des Betätigungsgriffes kann der Innenscheibenwischer an die verschiedenen Dimensionen verschiedener Fahrzeugtypen oder verschiedener Problemstellungen bei der Reinigung konkaver Flächen angepaßt werden. Zusätzlich kann eine Arretierung am Griff vorgesehen sein, die ein ungewolltes weiteres Ausziehen bzw. Zusammenschieben des eingestellten Betätigungsgriffs verhindert.

In einer Weiterentwicklung des Innenscheibenwischers ist in oder an dem Betätigungsgriff ein Behälter mit einer Reinigungsflüssigkeit vorgesehen, wobei die Reinigungsflüssigkeit über zumindest eine Leitung in den Wischerkörper förderbar ist und der Wischerkörper mindestens einen Kanal aufweist, über welchen die Reinigungsflüssigkeit dann auf die Wischerfläche verteilt wird, so daß der Schwamm getränkt wird. Der Behälter kann dabei die Form einer Ampulle oder Patrone aufweisen, die in den Griff des Innenscheibenwischers eingeschoben wird. Durch Andruck der Patrone bzw. der Ampulle wird dann frontseitig diese geöffnet, so daß die Reinigungsflüssigkeit über die Leitung in den Wischerkörper fließen kann. Mit dieser Ausgestaltung wird der Reinigungserfolg sehr stark gesteigert, da eine Naßreinigung gegenüber der herkömmlichen Trockenreinigung insbesondere bei Flächen, die mit Fetten, Ruß oder Zigarettenkondensat verschmutzt sind, wesentlich effektiver ist.

Der Transport der Reinigungsflüssigkeit kann dabei über eine in oder an dem Betätigungsgriff angeordnete Pumpe erfolgen. Die Pumpe kann hierbei von Hand betätigt werden. Es sind Mechanismen denkbar, die über einen Zylinder und einen Kolben ähnlich einer Spritze arbeiten oder über einen zusammendrückbaren Balg, ähnlich zu den Pumpquasten an Parfümflacons.

Um einen ungestörten Transport der Reinigungsflüssigkeit aus ihrem Behälter in den Wischkörper und damit auf die Wischerfläche zu gewährleisten, können bei einer Ausführung mit Kugelgelenk in die Gelenkkugel und in die Gelenkpfanne des Kugelgelenks Öffnungen eingebracht sein, wobei die Öffnungen einander so überlappen, daß im gesamten Schwenkbereich ein ungehinderter Transport der Reinigungsflüssigkeit erfolgen kann. Natürlich sind die Anschlüsse, das heißt die Gelenkzapfen, am Kugelgelenk ebenfalls mit Öffnungen versehen.

In einer Weiterbildung kann an dem Wischerkörper eine Aufsteckvorrichtung vorgesehen sein, mit welcher eine Gummilippe zum Abziehen der Scheibe arretiert werden kann.

Die Erfindung ist im folgenden anhand der Zeichnung beispielsweise veranschaulicht. Dabei zeigen:
- Fig. 1: eine schematische Seitenansicht eines Innenscheibenwischers,
- Fig. 2: einen Schnitt nach den Linien I-I aus Fig. 1,
- Fig. 3: eine vergrößerte Darstellung des Kugelgelenks,
- Fig. 4: eine Seitenansicht eines gestalterisch ausgereiften Ausführungsbeispiels des Innenscheibenwischers.

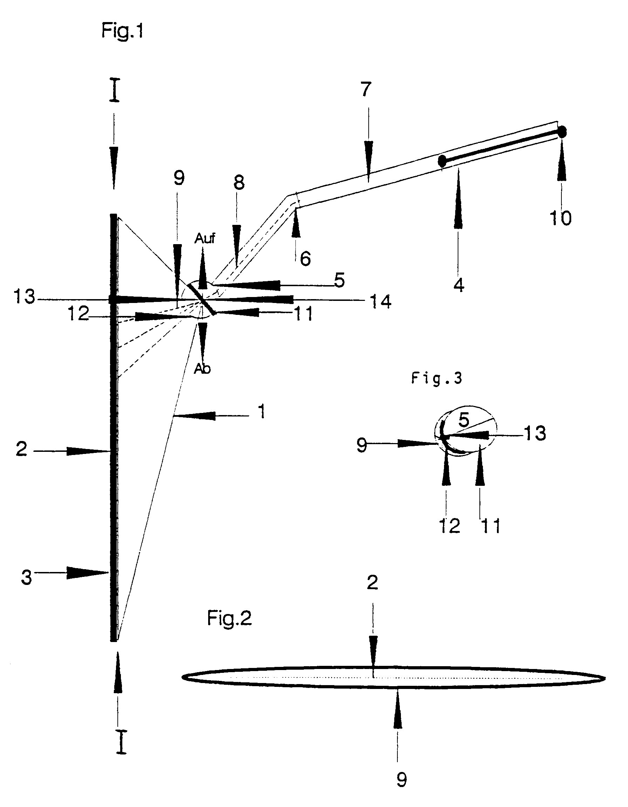

Wie aus Fig. 1 zu ersehen ist, besteht der Innenscheibenwischer aus einem in etwa keilförmigen Wischerkörper 1, von dem eine Fläche als Wischerfläche 2 vorgesehen ist. Die Wischerfläche 2 ist mit einem Schwamm 3 versehen. Anstelle eines Schwamms 3 können aber auch andere textile Materialien oder Gummi auf der Fläche angebracht sein (nicht gezeigt).

Ferner weist der Innenscheibenwischer einen Betätigungsgriff 4 auf. Der Betätigungsgriff 4 ist unter einem stumpfen Winkel 6 gebogen.

Der Wischerkörper 1 und der Betätigungsgriff 4 sind über das Kugelgelenk 5 miteinander verbunden. Das Kugelgelenk 5 besteht aus einer Gelenkkugel 11 und einer Gelenkpfanne 12. Der Wischerkörper 1 und der Betätigungsgriff 4 sind über das Gelenk 5 nur senkrecht zu der bevorzugten Wischrichtung, die mit den Pfeilen gekennzeichnet ist, verschwenkbar.

In dem Betätigungsgriff 4 ist ein Behälter 7, der mit einer Reinigungsflüssigkeit gefüllt ist, integriert. Am Ende des Betätigungsgriffs 4 ist ferner eine Pumpe 10 angeordnet, die den Transport der Reinigungsflüssigkeit in den Wischerkörper 1 bewirkt.

Der Transport der Reinigungsflüssigkeit erfolgt über die Leitung 8 und das Kugelgelenk 5. Im Kugelgelenk 5 (Fig. 3) sind in der Gelenkkugel 11 und in der Gelenkpfanne 12 Öffnungen 13, 14 angeordnet, die einander so überlappen, daß im gesamten Schwenkbereich ein ungehinderter Transport der Reinigungsflüssigkeit erfolgen kann. An das Kugelgelenk 5 schließt sich dann eine Vielzahl von Kanälen 9 im Wischerkörper 1 an, über welche die Reinigungsflüssigkeit auf die Wischerfläche 2 verteilt wird und somit den Schwamm 3 oder die dafür vorgesehenen textilen Materialien tränkt. Als Reinigungsflüssigkeit ist eine sehr leicht flüchtige Flüssigkeit vorgesehen, zum Beispiel Alkohol oder Salmiakgeist.

Die Fig. 2 zeigt eine Draufsicht auf die Wischerfläche 2 mit dem Schwamm 3, wobei die bevorzugte konvexe Ausbildung der Wischerfläche 3 erkennbar ist.

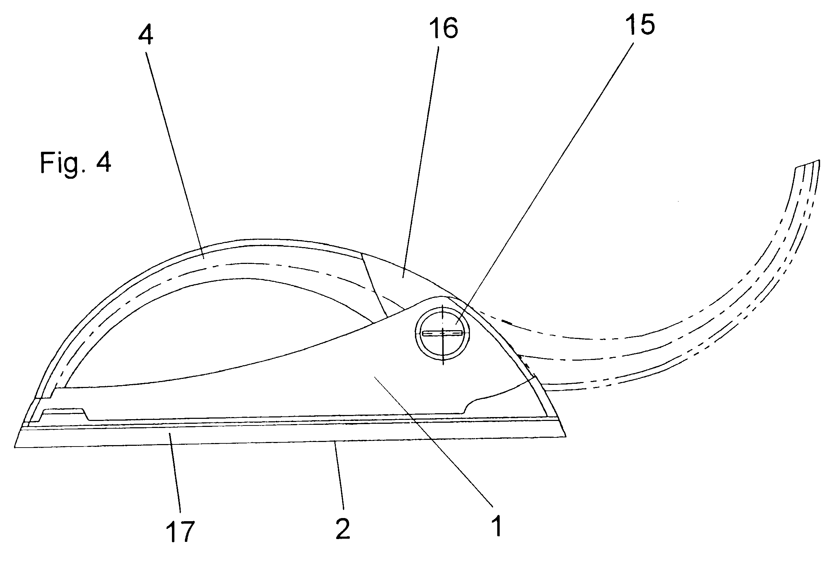

Bei dem in Fig. 4 gezeigten gestalterisch ausgereiften Ausführungsbeispiel setzt sich der in etwa keilförmige Wischerkörper 1 aus zwei Hälften (in der Zeichnung nicht dargestellt) zusammen, die durch Kunststoff-Spritzgußverfahren leicht hergestellt und anschließend innenseitig, z. B. durch an den Innenseiten vorgesehene Rastmittel, befestigt werden können. Im Bereich des einachsigen Drehgelenks 15, das z. B. aus zwei seitlich in miteinander fluchtende Ausnehmungen einsteckbaren Knöpfe mit einem Innen- bzw. einem in dieses eingreifenden Außengewinde bestehen kann, ist eine Ausnehmung vorgesehen, in die der bogenförmige Betätigungsgriff 4 in den Wischerkörper 1 einsetzbar und verschwenkbar ist. Der Betätigungsgriff 4 setzt sich ebenfalls aus zwei an ihrer Innenseite befestigbaren Kunststoff-Spritzteilen zusammen. Diese weisen im Bereich des Drehgelenks 15 einen Schmalbereich 16 auf, dessen Außenmaß etwa dem Innenmaß der Ausnehmung im Wischerkörper 1 entspricht.

Der Wischerkörper 1 und der Betätigungsgriff 4 sind so gestaltet, daß bei Nichtgebrauch des Innenscheibenwischers der Betätigungsgriff 4 über den Wischerkörper 1 verschwenkbar ist, so daß das freie Ende des Betätigungsgriffs 4 an dem dem Drehgelenk 15 gegenüberliegenden Ende des in etwa keilförmigen Wischerkörpers 1 anliegt und die gesamte Oberseite des Innenscheibenwischers eine geschlossene bogenförmige Gestalt hat. Diese ist nicht nur optisch ansprechend, sondern verleiht dem Innenscheibenwischer eine kompakte, platzsparende runde Form, die zur einfachen Aufbewahrung des Innenscheibenwischers dient.

Der zum Betrieb des Innenscheibenwischers ausgeschwenkte Betätigungsgriff 4 ist in Fig. 4 strichpunktiert dargestellt. Aufgrund seiner gebogenen Form läßt sich je nach Handhabung durch den Benutzer der Wischerkörper 1 in einem zur Scheibe günstigen Winkel halten.

Der Wischerkörper 1 weist an seiner Wischerfläche 2 eine kanalförmige Ausnehmung (in der Zeichnung nicht dargestellt) auf, in die eine austauschbare Lippe 17 einsteckbar ist. Zum Austausch können z. B. eine aus Mikroflies bestehende Wischlippe, eine aus Gummi bestehende Abziehlippe und eine aus Kunststoff gefertigte Eiskratzlippe vorgesehen sein.

### Bezugszeichenliste

- 1: Wischerkörper
- 2: Wischerfläche
- 3: Schwamm
- 4: Betätigungsgriff
- 5: Kugelgelenk
- 6: Winkel
- 7: Behälter
- 8: Leitung
- 9: Kanal
- 10: Pumpe
- 11: Gelenkkugel
- 12: Gelenkpfanne
- 13: Öffnung
- 14: Öffnung
- 15: Drehgelenk
- 16: Schmalbereich
- 17: Lippe

## Patentansprüche

1. Innenscheibenwischer, bestehend aus:
- einem Wischerkörper (1), von dem eine Fläche als Wischerfläche (2) vorgesehen ist, welche mit einem Schwamm (3) oder dergleichen versehen ist,
- einem Betätigungsgriff (4) und
- einem den Wischerkörper (1) und den Betätigungsgriff (4) verbindenden Gelenk,
**dadurch gekennzeichnet**, daß
- der Wischerkörper keilförmig ist,
- bei Nichtgebrauch des Innenscheibenwischers der Betätigungsgriff (4) über den Wischerkörper (1) verschwenkbar ist, so daß
- das freie Ende des Betätigungsgriffs (4) an dem dem Drehgelenk (15) gegenüberliegenden Ende des keilförmigen Wischerkörpers (1) anliegt und die gesamte Oberseite des Innenscheibenwischers eine geschlossene bogenförmige Gestalt hat.

2. Innenscheibenwischer nach Anspruch 1, **dadurch gekennzeichnet**, daß als Gelenk ein Kugelgelenk (5) vorgesehen ist.

3. Innenscheibenwischer nach einem der Ansprüche 1 oder 2 , **dadurch gekennzeichnet**, daß der Wischerkörper (1) und der Betätigungsgriff (4) über das Gelenk (5) nur senkrecht zu der bevorzugten Wischrichtung gegeneinander verschwenkbar sind.

4. Innenscheibenwischer nach einem der Ansprüche 1 oder 3, **dadurch gekennzeichnet**, daß die Wischerfläche (2) leicht konvex ausgebildet ist.

5. Innenscheibenwischer nach einem der Ansprüche 1 bis 4, **dadurch gekennzeichnet**, daß der Betätigungsgriff (4) unter einem stumpfen Winkel (6) gebogen ist.

6. Innenscheibenwischer nach einem der Ansprüche 1 bis 5, **dadurch gekennzeichnet**, daß der Betätigungsgriff (4) ausziehbar ist.

7. Innenscheibenwischer nach einem der Ansprüche 1 bis 6, **dadurch gekennzeichnet**, daß in oder an dem Betätigungsgriff (4) ein Behälter (7) mit einer Reinigungsflüssigkeit vorgesehen ist,
- daß die Reinigungsflüssigkeit über zumindest eine Leitung (8) durch das Gelenk in den Wischerkörper (1) förderbar ist,
- daß der Wischerkörper (1) mindestens einen Kanal (9) aufweist, über welchen die Reinigungsflüssigkeit auf die Wischerfläche (2) verteilbar ist.

8. Innenscheibenwischer nach Anspruch 7, **dadurch gekennzeichnet**, daß der Transport der Reinigungsflüssigkeit über eine in oder an dem Betätigungsgriff (4) angeordnete Pumpe (10) erfolgt.

9. Innenscheibenwischer nach Anspruch 2 und einem der Ansprüche 7 oder 8, **dadurch gekennzeichnet**, daß das Kugelgelenk (5) in der Gelenkkugel (11) und in der Gelenkpfanne (12) Öffnungen (13, 14) aufweist, wobei die Öffnungen (13, 14) einander so überlappen, daß im gesamten Schwenkbereich ein ungehinderter Transport der Reinigungsflüssigkeit erfolgen kann.

10. Innenscheibenwischer nach einem der Ansprüche 1 bis 9, **dadurch gekennzeichnet**, daß an dem Wischerkörper (1) eine Aufsteckvorrichtung vorgesehen ist, mit welcher eine Gummilippe befestigbar ist.

## Claims

1. Inside window wiper, comprising:
- a wiper element (1), one surface of which is designed as a wiper surface (2) provided with a sponge (3) or the like,
- an operating handle (4) and
- a joint connecting the wiper element (1) and the operating handle (4),
**characterised in that**
- the wiper element is wedge-shaped,
- the operating handle (4) can be swung over the wiper element (1) when the inside window wiper is not in use, so that
- the free end of the operating handle (4) lies against the end of the wedge-shaped wiper element (1) opposite the swivel joint (15) and the entire top side of the inside window wiper has the shape of a closed arc.

2. Inside window wiper as per Claim 1, **characterised in that** a ball-and-socket joint (5) is provided as the joint.

3. Inside window wiper as per one of the Claims 1 or 2, **characterised in that** the wiper element (1) and the operating handle (4) can only be pivoted relative to each other via the joint (5) in a direction perpendicular to the preferred wiping direction.

4. Inside window wiper as per one of the Claims 1 to 3, **characterised in that** the wiper surface (2) is of slightly convex design.

5. Inside window wiper as per one of the Claims 1 to 4, **characterised in that** the operating handle (4) is bent at an obtuse angle (6).

6. Inside window wiper as per one of the Claims 1 to 5, **characterised in that** the operating (4) handle is extendable.

7. Inside window wiper as per one of the Claims 1 to 6, **characterised in that** a container (7) with cleaning fluid is provided in or on the operating handle (4),
- that the cleaning fluid can be conveyed through the joint into the wiper element (1) via at least one line (8),
- that the wiper element (1) displays at least one duct (9), via which the cleaning fluid can be distributed over the wiper surface (2).

8. Inside window wiper as per Claim 7, **characterised in that** the cleaning fluid is transported via a pump (10) located in or on the operating handle (4).

9. Inside window wiper as per Claim 2 and one of the Claims 7 or 8, **characterised in that** the ball joint (5) displays openings (13, 14) in the joint ball (11) and in the joint socket (12), where the openings (13, 14) overlap in such a way that unimpeded transport of the cleaning fluid is possible through the entire pivoting range.

10. Inside window wiper as per one of the Claims 1 to 9, **characterised in that** a push-on device with which a rubber lip can be mounted is provided on the wiper element (1).

## Revendications

1. Essui-glace intérieur se composant de:
- d'un corps balayeur (1) dont une face est prévue comme face de balayage (2) pourvue d'une éponge (3) ou similaire,
- d'un manche de manoeuvre (4) et
- d'une articulation reliant le corps balayeur (1) au manche de manoeuvre (4)
caractérisé en ce que
- le corps balayeur est cunéiforme,
- en cas de non-usage de l'essui-glace intérieur, le manche de manoeuvre (4) peut être rabattu sur le corps balayeur (1) de sorte que
- l'extrémité libre du manche de manoeuvre (4) affleure l'extrémité opposée à l'articulation pivotante (15) du corps balayeur cunéiforme (1) et que l'entière face supérieure de l'essui-glace intérieur présente une forme cintrée close.

2. Essui-glace intérieur selon revendication 1, caractérisé en ce que l'articulation prévue est une articulation sphérique (5).

3. Essui-glace intérieur selon une des revendications 1 ou 2, caractérisé en ce que le corps balayeur (1) et le manche de manoeuvre (4) peuvent être pivotés, l'un vers l'autre, uniquement de façon perpendiculaire par rapport au sens de balayage préféré.

4. Essui-glace intérieur selon une des revendications 1 ou 3, caractérisé en ce que la face de balayage (2) est réalisée de façon légèrement convexe.

5. Essui-glace intérieur selon une des revendications 1 à 4, caractérisé en ce que le manche de manoeuvre (4) est courbé sous un angle obtus (6).

6. Essui-glace intérieur selon une des revendications 1 à 5, caractérisé en ce que le manche de manoeuvre (4) est télescopique.

7. Essui-glace intérieur selon une des revendications 1 à 6, caractérisé en ce que dans le manche de manoeuvre (4) ou à celui-ci est prévu un réservoir (7) contenant un liquide de nettoyage,
- que le liquide de nettoyage est transportable dans le corps balayeur (1), à travers l'articulation, par au moins une conduite (8),
- que le corps balayeur (1) présente au moins un canal (9) par lequel le liquide de nettoyage est répartissable sur la face de balayage (2).

8. Essui-glace intérieur selon revendication 7, caractérisé en ce que le transport du liquide de nettoyage s'effectue au moyen d'une pompe (10) disposée dans le manche de manoeuvre (4) ou à celui-ci.

9. Essui-glace intérieur selon revendication 2 ou une des revendications 7 ou 8, caractérisé en ce que l'articulation sphérique (5) présente, dans le boulet d'articulation (11) et dans le coussinet sphérique (12) de l'articulation des ouvertures (13, 14), ces ouvertures (13, 14) se recouvrant de façon à permettre le transport sans obstacles du liquide de nettoyage dans l'entière zone de pivotement.

10. Essui-glace intérieur selon une des revendications 1 à 9, caractérisé en ce qu'au corps balayeur (1) est prévu un dispositif à rapporter permettant de fixer une lèvre de caoutchouc.
